# EUROPEAN PATENT APPLICATION

(11) **EP 0 919 995 A2**
(43) Date of publication of application: **02.06.1999**
(21) Application number: 98117781.9
(22) Date of filing: 18.09.1998
(51) Int. Cl.: G11B 7/12, G11B 7/125, G11B 7/135

(54) **Optical recording and playback apparatus**

(30) Priority: 28.11.1997 JP 327388/97
(71) Applicant: NIKON CORPORATION, Tokyo (JP)
(72) Inventor: Saito, Jun, c/o Nikon Corp. (Int. Prop. Hqt.), Tokyo (JP); Arimoto, Rieko, c/o Nikon Corp. (Int. Prop. Hqt.), Tokyo (JP); Irita, Takeshi, c/o Nikon Corp. (Int. Prop. Hqt.), Tokyo (JP)
(74) Representative: Viering, Jentschura & Partner

(57) **Abstract**

An optical recording and playback apparatus (205) comprising an infrared light source (210), such as a laser, an objective lens system (230) and a solid immersion lens (240). The apparatus is disposed in close proximity to the surface (150a) of a recording medium (150). Light from light source (210) is converged by objective lens system (230) and irradiates the recording medium surface for optical recording and playback. The solid immersion lens comprises a material having a refractive index n ≥ 2.0. A scanning system (260) is provided for scanning the solid immersion lens, and hence a convergence spot (S2), along the recording medium surface, for recording and playback. The combination of an infrared light source and a solid immersion lens having a high (n ≥ 2.0) refractive index provides a convergence spot that is smaller than that possible in conventional apparatus.

## Description

### Field of the Invention

The present invention relates to an apparatus that uses laser light to record and play back information to and from a recording medium (e.g., an optical disk), and more particularly relates to such apparatus wherein a solid immersion lens is arranged proximate the recording medium.

### Background of the Invention

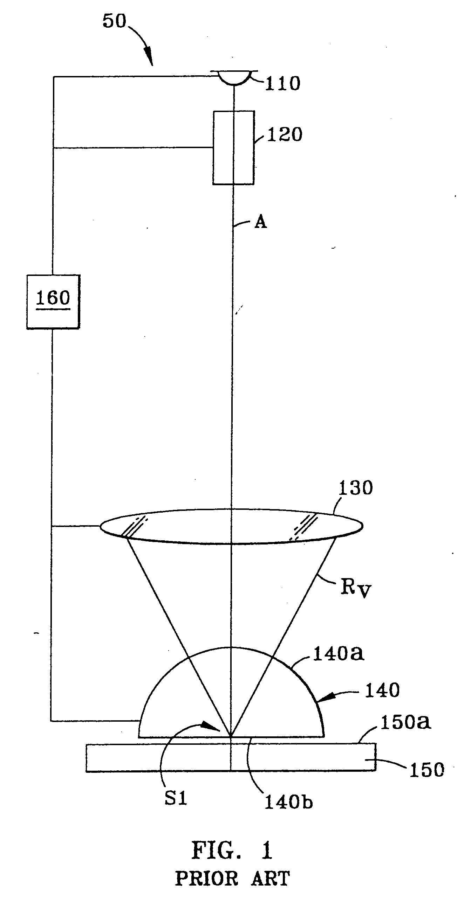

An example of a prior art optical recording ad playback apparatus is apparatus 50 shown in FIG. 1. Optical recording and playback apparatus 50 comprises, in order along optical axis A, a laser light source 110, a beam expander 120, an objective lens system 130 (shown as a single lens for the sake of illustration), and a solid immersion lens 140. Visible laser light (e.g., a wavelength of 680 nm) from laser light source 110 passes through beam expander 120 to objective lens 130, which converges light rays Rᵥ toward the center of solid immersion lens 140 having a hemispherical surface 140a and a planar bottom surface 140b, thereby forming a convergence spot S1 on bottom surface 140b of solid immersion lens 140 where visible light rays Rᵥ converge (the center of immersion lens 140 is at bottom surface 140b). If n is the refractive index of solid immersion lens 140, then the size of convergence spot S1 formed thereby is 1/nth that of the case in which there is no solid immersion lens.

In conventional optical recording and playback apparatus 50, solid immersion lens 140 comprises, for example, a material having a refractive index of 1.5 with respect to visible light of wavelength of 680 nm.

Apparatus 50 is designed to optically record ad play back information to and from a recording medium such as a optical disk 150. Optical disk 150 includes a top surface 150a that is arranged to be closely proximate bottom surface 140b of solid immersion lens 140. Top surface 150a is arranged so that it approaches as far as the near-field region of bottom surface 140b of solid immersion lens 140. Consequently, of the light forming convergence spot S1, the portion thereof that impinges at an angle greater than the critical angle is reflected. The remainder is divided into reflected light and transmitted light. However, top surface 150a of optical disk 150 approaches as far as the near field region of bottom surface 140b of solid immersion lens 140. Therefore, the evanescent field, which is the "leaked" field component associated with the totally internally reflected light, can also be captured, and recording to and playing back from optical disk 150 can be performed using the transmitted light and leaked (i.e., evanescent) light of solid immersion lens 140. A scanning system 160 is provided for scanning at least solid immersion lens 140 relative to surface 150a of optical disk 150, so as to scan convergence spot S1 over surface 150a of the optical disk. Typically, scanning system 160 is coupled with light source 110, beam expander 120, objective lens system 130, and solid immersion lens 140, whereby these elements are scanned together relative to surface 150a.

There is a strong demand in optical recording and playback apparatus to reduce the diameter of convergence spot S1 as much as possible, and to increase the recording density. To reduce the diameter of convergence spot S1, the conventional options have been to reduce the wavelength of the light from the light source, and to fabricate the solid immersion lens out of a material with a high refractive index. Nevertheless, it is difficult in practice to reduce the wavelength of the light from the light source to, for example, less than 500 nm. In addition, lens materials suited to practical use and having a refractive index of 2.5 or greater with respect to the visible wavelength region do not exist. Consequently, it has heretofore been very difficult to reduce the convergence spot diameter.

### Summary of the Invention

The present invention relates to an apparatus that uses laser light to record and play back information to and from a recording medium (e.g., an optical disk), and more particularly relates to such apparatus wherein a solid immersion lens is arranged proximate the recording medium.

The present invention takes the above-mentioned difficulties into consideration, and has the objective to provide an optical recording and playback apparatus that can form a small convergence spot compared with conventional apparatus, thereby increasing recording density.

To achieve this objective, the optical recording and playback apparatus of the present invention comprises, in order along an optical axis, an infrared light source (such as an infrared laser), and an objective lens system disposed between the infrared light source and a recording medium surface. The objective lens system is designed so as to converge light from the infrared light source onto the recording medium surface. The apparatus further includes a solid immersion lens arranged in close proximity to the recording medium surface between the surface and the light source side, this lens being designed so as to convergence light from the infrared light source to form a convergence spot on the recording medium surface. The apparatus further includes a scanning system for scanning at least the solid immersion lens along the recording medium surface so as to scan the convergence spot over the recording medium surface.

Infrared light has a wavelength λ of 750 to 1000 nm, which is longer than that of visible light. Since a solid immersion lens can be made using a material with a high refractive index with respect to infrared light, the convergence spot can be made smaller than possible with existing apparatus. For example, to obtain a convergence spot of a size the same as the convergence spot obtained by a solid immersion lens with a refractive index n = 1.5 with conventionally used visible light of wavelength λ= 680 nm, a material with a refractive index n = 2.1 should be used if using an infrared light source of wavelength λ= 830 nm. Therefore, if using infrared light of wavelength λ= 780 nm, a material with a refractive index n = 1.9 should be used. Accordingly, if infrared light having a wavelength of λ= 780 nm or greater is used and a solid immersion lens is made out of a material having a refractive index n ≥ 2.0, then a convergence spot smaller than obtained heretofore can be obtained and the recording density can be improved.

Lens materials practically suited for use with an infrared light source include silicon, titanium dioxide, gallium arsenide, aluminum gallium arsenide, amorphous silicon, indium phosphide, germanium, cadmium tellurium, indium arsenide, indium antimony, lead sulfide, silicon carbide, gallium phosphide, diamond and arsenic sulfide. Each of these materials has a refractive index of 2.4 or greater with respect to infrared light.

### Brief Description of the Drawings

FIG. 1 is a simplified optical schematic diagram of the configuration of a prior art optical recording and playback apparatus; and
FIG. 2 is a simplified optical schematic diagram of the configuration of an optical recording and playback apparatus according to the present invention.

### Detailed Description of the Invention

The present invention relates to a apparatus that uses laser light to record and play back information to and from a recording medium (e.g., an optical disk), and more particularly relates to such apparatus wherein a solid immersion lens is arranged proximate the recording medium.

The present invention takes such problems into consideration, and has the objective to provide a optical recording and playback apparatus that can form a small convergence spot compared with the past, and can increase recording density.

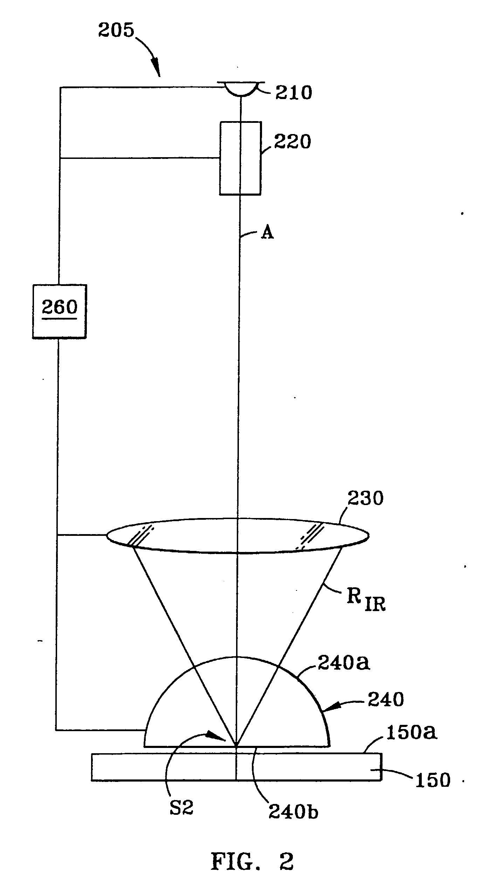

With reference now to FIG. 2, the present invention is an optical recording and playback apparatus 205 comprising, in order along optical axis A, an infrared light source 210, a beam expander 220, an objective lens system 230 (shown as a single lens for the sake of illustration), a solid immersion lens 240 and optical disk (recording medium) 150. Light source 210 may be, for example, an infrared laser. There are two significant and counter-intuitive differences between apparatus 205 of the present invention and apparatus 50 of the prior art: namely, that in the present invention, light source 210 is an infrared light source rather than a visible light source, and that solid immersion lens 240 comprises a high-index infrared-transparent material.

Infrared light source 210 provides light having a wavelength λ of approximately 780 nm or greater. This light passes through beam expander 220 to objective lens 230, which converges infrared light rays R_{IR} toward the center of solid immersion lens 240 having a hemispherical surface 240a and a planar bottom surface 240b, thereby forming convergence spot S2 on bottom surface 240b of solid immersion lens (the center of immersion lens 240 is at bottom surface 240b). In other words, solid immersion lens 240 is shaped by cutting a sphere at a plane passing through the center thereof. If n is the refractive index of solid immersion lens 240, then the size of convergence spot S2 is 1/nth that of the case in which there is no solid immersion lens 240.

A scanning system 260 is provided for scanning at least solid immersion lens 240 relative to surface 150a of optical disk 150, so as to scan convergence spot S2 over surface 150a of the optical disk. Typically, scanning system 260 is coupled with light source 210, beam expander 220, objective lens 230 and solid immersion lens 240, as illustrated in FIG. 2, so that all these elements are scanned together relative to surface 150a of optical disk 150. However, it is to be appreciated that scanning system 260 may be coupled with only solid immersion lens 240 or with such lens and some, but not all, of the elements of system 205. Optical disk 150 is arranged as described above in connection with apparatus 50, and the recording and playback is also as described above.

The benefit of employing an infrared light source 210 in the present apparatus is that solid immersion lens 240 can be formed using a material with a relatively large refractive index. Using infrared light rather than visible light is counter-intuitive because it otherwise increases the diameter of convergence spot S2. Nevertheless, by making solid immersion lens 240 from a material with a sufficiently large refractive index, the diameter of convergence spot S2 is actually decreased. By appropriately combining infrared light source 210 and large refractive index solid immersion lens 240, convergence spot S2 can be reduced and the recording density can be increased to a greater degree than when conventional visible light is used.

Specifically, to obtain a diameter equivalent to the diameter of convergence spot S1 obtained by using conventional visible light having a wavelength λ= 680 nm and by using a solid immersion lens 240 comprising a material having a refractive index of 1.5, infrared laser light having a wavelength λ= 780 nm and a solid immersion lens 240 comprising material having a refractive index of 1.9 is required. Consequently, in the present apparatus, infrared light having a wavelength λ= 780 nm or greater, such as from a laser, and a solid immersion lens 240 comprising a material having a refractive index n ≥ 2.0 is used.

With continuing reference to FIG. 2, the materials comprising solid immersion lens 240 of the present invention having a high refractive index (i.e., n ≥ 2.0) include the materials shown in Table 1, below. In Table 1, the refractive index of each material is shown together with the corresponding infrared wavelength. As can be seen from Table 1, all the materials listed therein have refractive indices of 2.4 or greater, which is very high. The values in Table 1 are based on data in the following publications: 1) Handbook of Optical Constants in Solids (Edited by E. D. Palk) 1985, Academic Press Inc., and 2) Heterostructure Lasers (H. C. Casey, M. B. Danish) 1978, Academic Press Inc.

**TABLE 1**

| MATERIALS FOR SOLID Immersion lens 240 | | |
|---|---|---|
| MATERIAL | REFRACTIVE INDEX | WAVELENGTH |
| Silicon | 3.67 | 826.6 nm |
| Titanium dioxide | 2.52 | 820 nm |
| Gallium arsenide | 3.67 | 826.2 nm |
| Aluminum gallium arsenide | 3.38 | 826.6 nm |
| (Al_{0.38}Ga_{0.62}As) | 3.42 | 780 nm |
| Amorphous silicon | 3.86 | 826.6 nm |
| Indium phosphide | 3.46 | 826.6 nm |
| Germanium | 4.65 | 826.6 nm |
| Cadmium tellurium | 2.98 | 826.6 nm |
| Indium arsenide | 3.71 | 826.6 nm |
| Indium antimony | 4.42 | 826.6 nm |
| Lead sulfide | 4.50 | 885.6 nm |
| Silicon carbide | 2.60 | 826.6 nm |
| Gallium phosphide | 3.18 | 826.6 nm |
| Diamond | 2.40 | 800 nm |
| Arsenic sulfide | 2.67 | 826.6 nm |

### Working Examples

### Working Example 1

With reference to FIG. 2, in Working Example 1, optical recording and playback apparatus 205 includes an infrared laser as light source 210 emitting light of wavelength λ = 830 nm. Further, solid immersion lens 240 comprises silicon, which has a refractive index n = 3.6 for light of wavelength λ = 830 nm. In apparatus 205 of Working Example 1, the diameter of convergence spot S2 is half that of a conventional apparatus having a solid immersion lens 140 with a refractive index n = 1.5 and a visible light source 110 of wavelength λ= 680 nm. Consequently, the present invention provides a recording density 4 times greater than obtained previously with conventional means.

### Working Example 2

With continuing reference to FIG. 2, in Working Example 2, optical recording and playback apparatus 205 includes an infrared laser as light source 210 emitting light of wavelength λ = 780 nm. Further, solid immersion lens 240 comprises aluminum gallium arsenide (Al_{0.38}Ga_{0.62}As), which has a refractive index n = 3.42 for light of wavelength λ = 780 nm. As in Working Example 1, the diameter of convergence spot S2 is half that of conventional apparatus and has a recording density 4 times greater than that obtained previously with conventional means.

Although a hemispherical solid immersion lens is used in the above Working Examples, the recording density can be further improved if a solid immersion lens having an aplanatic surface with refractive power (i.e., a so-called Super SIL) is used.

As explained above, according to the present invention, since an infrared light source providing light having a wavelength longer than visible light is used as light source 210, and since a solid immersion lens 240 is fabricated using a material with a high refractive index with respect to the wavelength of light from the infrared laser, convergence spot S2 formed on the recording medium (e.g., optical disk 150) can be made smaller than previously possible. This allows for the recording density to be increased. In other words, by modifying key elements in apparatus 50 to create apparatus 205 (namely, making laser light source 110 infrared light source 210 and solid immersion lens 140 a high-index infrared lens 240 ), it is possible to dramatically improve the recording density.

While the present invention has been described in connection with preferred embodiments and Working Examples, it will be understood that it is not limited to those embodiments and Working Examples. On the contrary, it is intended to cover all alternatives, modifications and equivalents as may be included within the spirit and scope of the invention as defined in the appended claims.

## Claims

1. An apparatus for optically recording and playing back information to and from a recording medium surface of an optical disk, the apparatus comprising, in order along an optical axis:
a) a light source for generating infrared light;
b) an objective lens system, disposed between said light source and the recording medium surface, designed so as to converge said infrared light onto the recording medium surface;
c) a solid immersion lens arranged closely proximate the recording medium surface between the surface and said light source, said lens designed so as to converge said infrared light to form a convergence spot on the recording medium surface; and
d) a scanning system attached to at least said solid immersion lens for scanning said infrared light along the recording medium surface so as to scan said convergence spot over the recording medium surface.

2. An apparatus according to claim 1, wherein said light source is an infrared laser.

3. An apparatus for optically recording and playing back information to and from a recording medium surface, the apparatus comprising, in order along an optical axis:
a) an infrared laser light source for generating infrared light;
b) a solid immersion lens arranged proximate the recording medium surface between the surface and said light source, said lens designed so as to convergence light from said laser light source to from a convergence spot on the recording medium surface; and
c) scanning means for scanning said at least said solid immersion lens along the recording medium surface so as to scan said convergence spot over the recording medium surface.

4. An apparatus according to any of claims 1 to 3, wherein said solid immersion lens comprises a material having a refractive index of 2.0 or greater with respect to said infrared light.

5. An apparatus according to any of claims 1 to 4, wherein said solid immersion lens comprises a material having a refractive index of 2.4 or greater with respect to said infrared light.

6. An apparatus according to claim 5, wherein said material comprises one from the group of materials consisting of: silicon, titanium dioxide, gallium arsenide, aluminum gallium arsenide, amorphous silicon, indium phosphide, germanium, cadmium tellurium, indium arsenide, indium antimony, lead sulfide, silicon carbide, gallium phosphide, diamond and arsenic sulfide.

7. An apparatus according to any of claims 1 to 6, wherein said infrared light has a wavelength of 780 nm or greater.

8. An apparatus according to any of claims 1 to 7, wherein said solid immersion lens is aplanatic.

9. An apparatus according to any of claims 1 to 8, further including an optical disk having a recording medium surface.
